# EUROPEAN PATENT APPLICATION

(11) **EP 2 608 366 A2**
(43) Date of publication of application: **26.06.2013**
(21) Application number: 12197505.6
(22) Date of filing: 17.12.2012
(51) Int. Cl.: H02K 9/22, H02K 15/10

(54) **Electric machine with encapsulated end turns**

(30) Priority: 22.12.2011 US 201113335144
(71) Applicant: Remy Technologies, LLC, Pendleton, IN 46064 (US)
(72) Inventor: Chamberlin, Bradley D., Pendleton, IN 46064 (US); Hamer, Colin, Noblesville, IN 46060 (US)
(74) Representative: Twelmeier Mommer & Partner

(57) **Abstract**

An electric machine having a rotor and a stator. The stator includes an electrically conductive wire forming a stator winding. The stator winding forms a first plurality of end turns projecting axially beyond an axial end of the stator core. Each of the wire segments forming the first plurality of end turns has a discrete electrically insulative outer layer. A heat transmissive material having a thermal conductivity of at least about 50 W·m⁻¹·K⁻¹ encapsulates the first plurality of end turns. A ceramic material may be used to provide the electrically insulative outer layer of the winding and a metallic material may be used to form the heat transmissive material encapsulating the end turns. A method of manufacture is also disclosed.

## Description

### BACKGROUND

The present invention relates to electrical machines and more particularly to the cooling of electrical machines.

Although many electric machines operate at very high efficiencies, some energy is necessarily lost. Such energy losses take various forms including friction losses, core losses and hysteresis losses and result in the generation of waste heat. In some applications, heat must be actively removed from the electric machine to prevent this waste heat from reaching impermissible levels in the windings of the electric machine.

Various methods of removing heat from electric machines are known in the art. Spray cooling, which typically involves spraying oil on the end windings to remove heat from the electric machine, is one known method. It is also known to provide the electric machine with a "water jacket" taking the form of a housing with fluid passages through which a cooling liquid, such as water, may be circulated to remove heat from the electric machine. It is also known to provide air flow, which may be assisted with a fan, through or across the electric machine to promote cooling.

While various effective means for cooling an electric machine are known, further improvements in this area remain desirable.

### SUMMARY

The present invention provides an electric machine having a stator with end turns which are encapsulated in a material which facilitates the removal of heat from the end turns.

In one embodiment, an electric machine is provided that includes a rotor and a stator operably coupled with the rotor. The stator includes a stator core defining first and second axial ends and at least one electrically conductive wire forming a stator winding and mounted on the stator core. The stator winding forms a first plurality of end turns projecting axially beyond the first axial end and includes a plurality of wire segments having electrically insulative outer layers with each wire segment having a discrete insulative outer layer. A heat transmissive material is disposed on the first plurality of end turns and has a thermal conductivity of at least 50 W·m⁻¹K⁻¹.

In another embodiment, an electric machine is provided that includes a rotor and a stator operably coupled with the rotor. The stator includes a stator core defining first and second axial ends and at least one electrically conductive wire forming a stator winding and mounted on the stator core. The stator winding forms a first plurality of end turns projecting axially beyond the first axial end and a ceramic material is disposed on segments of the conductive wire forming the first plurality of end turns. A metal material is disposed on the first plurality of end turns.

The entire length of the conductive forming the stator winding can have an outer layer of the ceramic material.

According to an advantageous refinement of the invention, the metal material substantially encapsulates the first plurality of end turns, directly contacts the ceramic material and has a thermal conductivity of at least 150 W·m⁻¹·K⁻¹, for example it may have a thermal conductivity of at least 200 W·m⁻¹·K⁻¹.

In still another embodiment, a method of manufacturing an electric machine is provided that includes providing a rotor and a stator core having first and second axial ends. The method also includes forming a winding out of a conductive wire and installing the winding on the stator core wherein the winding forms a first plurality of end turns projecting beyond the first axial end of the stator core. The conductive wire forming the winding is provided with an electrically insulative outer covering prior to installing the winding on the stator core. The stator core is coupled with the rotor and the first plurality of end turns is covered with a heat transmissive material having a thermal conductivity of at least 50 W·m⁻¹·K⁻¹.

The heat transmissive material may be a metallic material. According to an advantageous refinement of the invention, the material has a thermal conductivity of at least 150 W·m⁻¹·K⁻¹. For example, the material may have a thermal conductivity of 200 W·m⁻¹·K⁻¹ or more.

### BRIEF DESCRIPTION OF THE DRAWINGS

The above mentioned and other features of this invention, and the manner of attaining them, will become more apparent and the invention itself will be better understood by reference to the following description of embodiments of the invention taken in conjunction with the accompanying drawings, wherein:
Figure 1 is a side view of an electric machine.
Figure 2 is an end view of the electric machine of Figure 1.
Figure 3 is a side view of a plurality of stator end turns.
Figure 4 is an end view of stator end turns.
Figure 5 is a cross sectional view of encapsulated end turns.
Figure 6 is a schematic view of a stator winding.
Figure 7 is a cross sectional view of an electrical machine and housing.
Figure 8 is a detailed cross sectional view of an electrical machine and alternative housing.
Figure 9 is a schematic view depicting cooling ribs formed by a heat transmissive material.
Figure 10 is a cross sectional view schematically depicting a fluid passage through the heat transmissive material.
Figure 11 is a schematic view of an electric machine with a gap between the stator core and heat transmissive material.

Corresponding reference characters indicate corresponding parts throughout the several views. Although the exemplification set out herein illustrates embodiments of the invention, in several forms, the embodiments disclosed below are not intended to be exhaustive or to be construed as limiting the scope of the invention to the precise forms disclosed.

### DETAILED DESCRIPTION

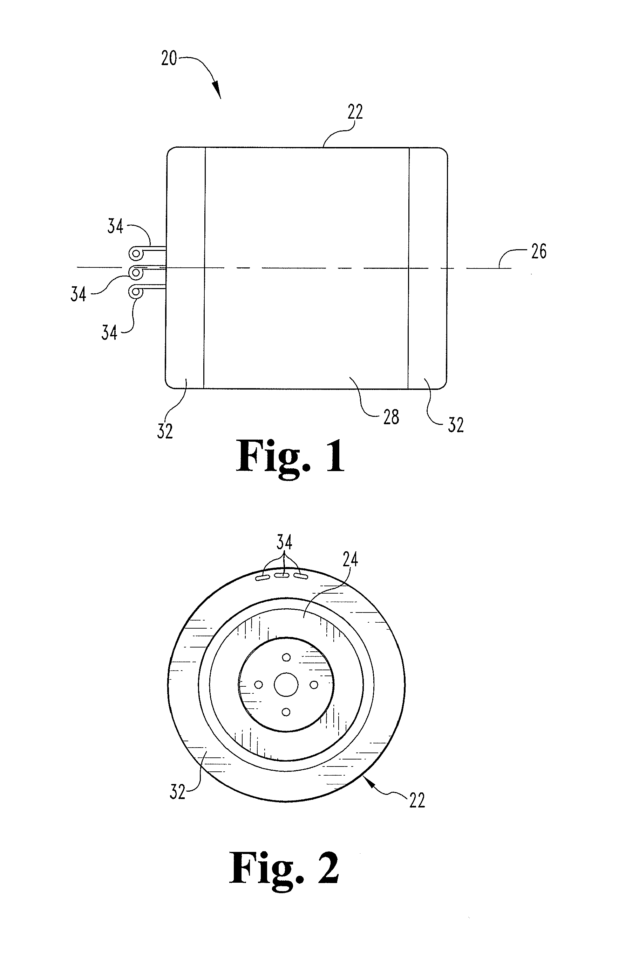

An electric machine 20 is shown in Figures 1 and 2. Electric machine 20 includes a stator 22 and a rotor 24 operably coupled together. Rotor 24 defines a rotational axis 26 of the electric machine. In the illustrated embodiment, electric machine 20 is a three phase induction motor but other embodiments may take the form of alternative electric machines wherein it is advantageous to cool the stator windings of the machine. The general principles by which a three phase induction motor and other electrical machines operate are well-known to those having ordinary skill in the art.

Stator 22 includes windings 30 which are mounted on stator core 28. As will be appreciated by those having ordinary skill in the art, windings 30 have an axially extending portion 48 which extends between the opposite axial ends 40 of stator core 28 and end turns 38 which project axially beyond the axial ends 40 of stator core 28. As discussed in greater detail below, end turns 38 are encapsulated in a heat transmissive material 32. Connectors 34 which project through the heat transmissive material 32 are used to connect the stator windings 30 to a source of electrical power such as three phase AC power.

The illustrated stator core 28 has a conventional structure and is formed out of a plurality of stacked sheet metal laminations and has a generally cylindrical shape with a central bore for receiving rotor 24. Although it is conventional to utilize a stator which surrounds the rotor, alternative embodiments of the electric machine may employ a central stator and a rotor that surrounds the stator.

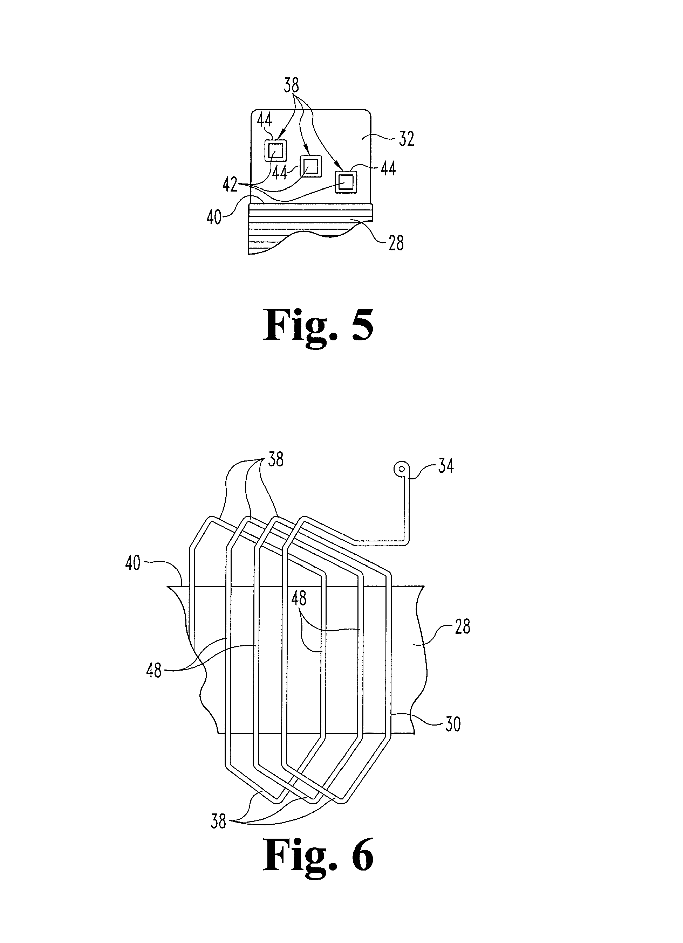

In the illustrated embodiment, plurality of slots 36 extend the axial length of the stator core 28 on the radially inward facing surface of the stator core 28. Windings 30 are mounted on stator core 28 by inserting the axially extending portions 48 of windings 30 in slots 36. The short segments 38 of windings 30 which project beyond the axial ends 40 of the stator core 28 form the end turns. As can be seen in Figure 5, the end turns 38 located at each of the axial ends 40 of stator core 28 are formed electrically conductive wire 42 that has an electrically insulative outer layer 44 with each end turn wire segment 38 having a discrete insulative outer layer 44. In other words, the end turns 38 are not insulated by a single monolithic mass of insulative material that envelops multiple end turns 38.

In the illustrated embodiment, copper is used to form the electrically conductive wire 42 and the entire length of wire 42 forming the windings 30 is insulated with a ceramic material. Other materials can also be used to form wire 42 and insulative layer 44 provided that the envelopment of end turns 28 with heat transmissive material 32 does not damage wire 42 or insulative layer 44. By utilizing a heat transmissive material 32 with a melting temperature that is lower than the melting temperature of insulative outer layer 44 and conductive wire 42 the end turns 28 can be enveloped with molten heat transmissive material 32 without damage. It would be possible to utilize a winding 30 wherein only the end turns 38 are insulated, but it will generally be more practical to insulate the entire length of the wire 42 forming windings 30.

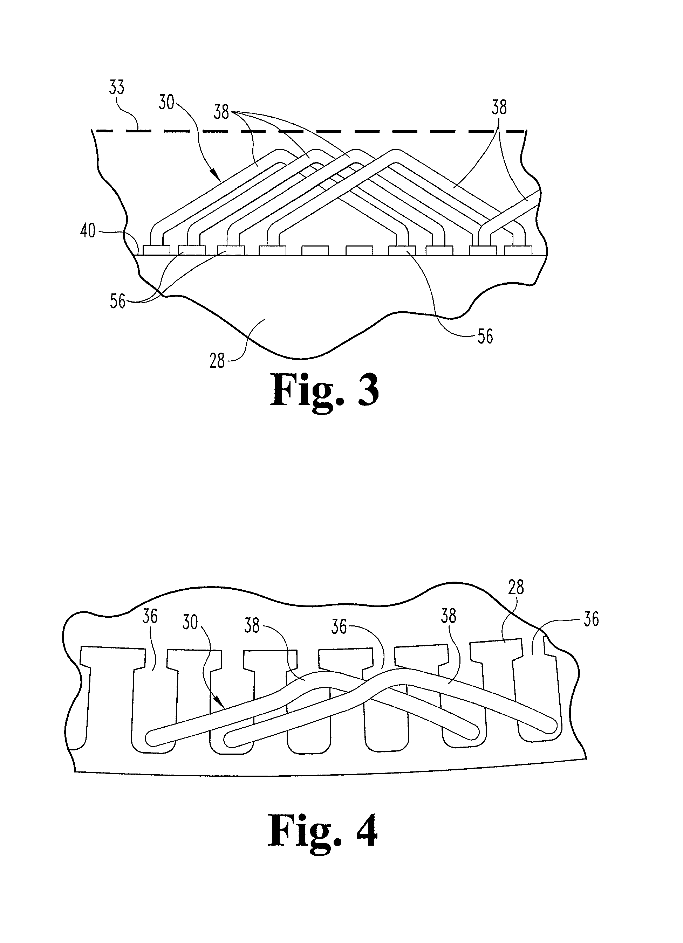

The encapsulation of end turns 38 by heat transmissive material 32 is best understood with the reference to Figures 3-5. Figure 3 is a side view of one axial end of the stator and schematically depicts end turns 38. In Figure 3, dashed line 33 indicates the upper extent of the heat transmissive material 32. Figure 4 is an end view depicting the stator core 28 and two end turns 38. The heat transmissive material 32 is not shown in Figure 4. Figure 5 is a cross sectional view through the heat transmissive material 32 and three end turns 38. Only a limited number of end turns 38 have been depicted in Figures 3-5 to enhance graphical clarity. It is also noted that the cuffs of insulating slot liners 56 can be seen in Figure 3. Slot liners 56 are commonly used to provide an electrically insulating barrier between the wire 42 forming windings 30 and the laminations of stator core 28. When the entire length of wire 42 is provided with an outer layer 44 of electrical insulation, the use of slot liners 56 may be avoided.

Heat transmissive material 32 encapsulates end turns 38 with material 32 directly contacting the outer layer 44 of end turns 38. The cross sectional view depicted in Figure 5 illustrates end turns 38 embedded within heat transmissive material 32. In Figure 5, the end turns 38 are not shown in contact with each other. In many applications, however, the end turns 38 will have some contact between the individual wire segments forming end turns 38 within heat transmissive material 32 which surrounds the end turns 38. It will generally be desirable to maximize the surface area over which the heat transmissive material 32 directly contacts outer layer 44 to thereby maximize the transfer of heat from windings 30 to heat transmissive material 32. The encapsulation of end turns 38 within heat transmissive material 32 not only facilitates the transfer of heat but also secures end turns 38 within material 32. It is known to encapsulate and secure the end turns of a stator using potting materials. Traditional potting materials include epoxy and resinous materials and typically have a thermal conductivity of no more than about 3.0 W·m⁻¹·K⁻¹. While such low thermally conductive traditional potting materials provide for the structural fixation of the end turns, they typically do not facilitate the removal of heat.

In contrast to traditional potting materials, heat transmissive material 32 has a thermal conductivity of at least about 50 W·m⁻¹·K⁻¹, advantageously at least about 150 W·m⁻¹·K⁻¹, and, even more advantageously at least about 200 W·m⁻¹·K⁻¹. Using a material with an elevated thermal conductivity improves the transfer of heat from end turns 38.

Heat transmissive material 32 removes thermal energy from end turns 38 by two different mechanisms. First, heat transmissive material 32 acts as a conduit removing heat from end turns 38 and subsequently transferring the heat to another medium that is thermally coupled with material 32. For example, material 32 could transfer the heat to a housing or to air or another fluid in direct contact with material 32. Second, heat transmissive material 32 acts as a heat sink, with the thermal energy being removed from end turns 38 remaining in material 32 and raising the temperature thereof. In nearly all applications, heat transmissive material 32 will remove thermal energy from end turns 38 via both of these mechanisms.

In the illustrated embodiment, heat transmissive material 32 is a metallic material and is an aluminum alloy. Tin, silver and other materials may be added to heat transmissive material 32 to obtain the desired physical properties. Besides thermal conductivity, one of the more important physical properties of material 32 is its melting temperature relative to wire 42 and outer layer 44. To prevent destruction of wire 42 and outer layer 44 during encapsulation by the molten material 32, material 32 is selected such that its melting temperature lower than the melting temperature of wire 42 and outer layer 44 and can contact outer layer 44 in a liquid condition without causing damage to wire 42 or outer layer 44. While it will generally be desirable to encapsulate the end turns with a fully liquid heat transmissive material and allow the heat transmissive material to cure to a solid or semi-solid state, it may also be possible to encapsulate the end turns when the heat transmissive material is in a partially molten condition.

In the illustrated embodiment, wire 42 is formed of copper which has a melting temperature of about 1084°C. It is also known to form high temperature magnet wire out of nickel clad copper or solely out of nickel and such high temperature magnet wire may also be used to form wire 42. Nickel has a melting temperature of about 1453 °C. It is known to provide magnet wires intended for high temperature applications with a ceramic outer layer 44. Such an outer layer may be formed out of a fully cured vitreous enamel film which is firmly bonded to and has the same flexibility as the base wire. Ceramic coated magnet wire is commercially available with ceramic coatings which may tolerate temperatures of about 1,000 °C.

Aluminum has a melting temperature of about 660 °C and, thus, can be readily employed as material 32 with copper wire 42 having a ceramic coating 44 either as pure aluminum or as an aluminum alloy. For example, tin, with a melting temperature of approximately 232 °C, and silver, with a melting temperature of approximately 961 °C, can be used with aluminum to form heat transmissive material 32. The precise ratios of materials used in heat transmissive material 32 can be adjusted to not only control the melting temperature of material 32 but also the other physical properties of material 32 such as the thermal conductivity and coefficient of thermal expansion of material 32.

With regard to the thermal conductivity of the materials used to form encapsulating material 32, it is noted that the thermal conductivity of aluminum is somewhat greater than 200 W·m⁻¹·K⁻¹, for tin it is approximately 66.8 W·m⁻¹·K⁻¹, and for silver it is somewhat greater than 400 W·m⁻¹·K⁻¹. With regard to wire 42, copper has a thermal conductivity of between 350 and 400 W·m⁻¹·K⁻¹ and nickel has a thermal conductivity of approximately 91 W·m⁻¹·K⁻¹. Ceramic materials used to form outer layer 44 will often have a thermal conductivity of about 30 to 45 W·m⁻¹·K⁻¹. While it is generally desirable to maximize the thermal conductivity of encapsulating material 32, other design factors may also influence the selection of encapsulating or heat transmissive material 32. On the lower end of thermal conductivity values, it is desirable for the encapsulating material 32 to have a thermal conductivity greater than that of the outer layer 44 and by utilizing an encapsulating material 32 having a value of at least about 50 W·m⁻¹·K⁻¹, encapsulating material 32 will generally have a greater thermal conductivity than the outer layer 44.

The use of metallic materials to form heat transmissive material 32 provides several advantages. The use of metal to form encapsulating material 32 not only provides an enhanced level of thermal conductivity relative to traditional potting materials but will also generally provide a coefficient of thermal expansion that is relatively close to that of wire 42. As a result, wire 42 is less likely to be damaged due to differences in thermal expansion experienced by wire 42 and material 32 throughout the operating temperature range of electric machine 20. It is also possible to position a material between the end turns and the heat transmissive material to compensate for the differences in thermal expansion between the end turns and the heat transmissive material.

Although it is advantageous to use a metallic material to encapsulate end turns 38, alternative embodiments could employ a combination of metallic and non-metallic materials or purely non-metallic materials provided that such materials possess a relatively elevated thermal conductivity. It is also noted that metals are typically electrically conductive materials and the use of an electrically insulative outer layer 44 to separate wire 42 from the heat transmissive material 32 allows for the use of such electrically conductive materials as the heat transmissive material without shorting the end turns.

The illustrated embodiment has a wire 42 with a 0.1 to 0.3 millimeter thick ceramic outer layer 44. Other materials, however, may also be employed to form outer insulative layer 44. For example, if tin is the sole or predominate material used to form heat transmissive material 32, e.g., a heat transmissive material formed out of tin and silver, outer layer 44 does not require the same thermal performance provided by a ceramic material and it may be possible to utilize a polyimide film, with a temperature limit of approximately 260°C, as the outer layer 44. Various other alternative embodiments are also possible. For example, a mixture of metallic and non-metallic materials can be used form heat transmissive material 32 and, with some materials 32, it may also be possible to employ a wire 42 having an outer layer 44 formed of polyimide enamels having a temperature limit of about 180 °C.

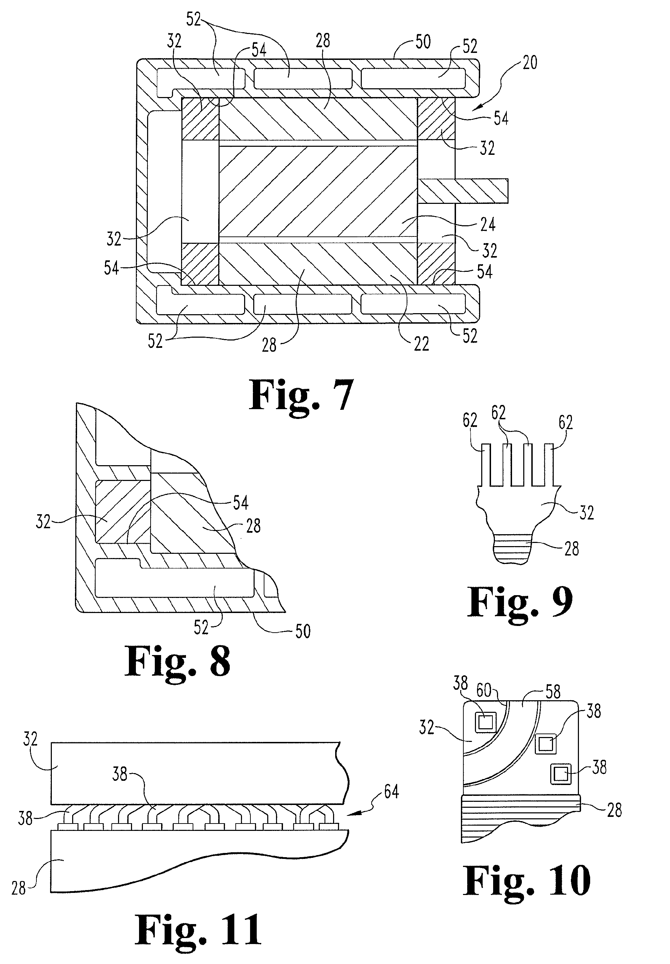

Stator 22 and rotor 24 forming electric machine 20 can be disposed in a housing 50 as shown in Figures 7 and 8. By thermally coupling heat transmissive material 32 with housing 50, the cooling of electric machine 20 can be further enhanced. It will generally be advantageous to have heat transmissive material 32 directly abut a surface 54 of housing 50 to thermally couple the heat transmissive material 32 with housing 50. Other means of providing the transfer of thermal energy between heat transmissive material 32 and housing 50 can also be employed.

The housings 50 depicted in Figures 7 and 8 have fluid passages 52 through which a cooling liquid can be circulated to remove heat transferred to the housing 50 from the heat transmissive material 32. Housings having such fluid passages are often referred to as water jackets. Although the provision of fluid passages 52 greatly increases the heat removal capacity of the housing 50, housings without such passages, when thermally coupled with the heat transmissive material 32, also facilitate the removal of heat by acting as a heat sink. Such housings may also include fins or other means for dissipating heat into the surrounding environment. Fans may also be employed to increase the rate of such heat dissipation.

The manufacture and assembly of electric machine 20 will now be described. Rotor 24 is manufactured utilizing conventional methods. Windings 30 can be wound into loops using conventional winding equipment and methods. Stator core 28 has a conventional structure and can be formed out of stacked metal laminations. Windings 30 are installed on stator core 28 with end turns 38 projecting beyond axial ends 40. The insertion of windings 30 can be accomplished using conventional insertion equipment and methods to insert the axial portions 48 of windings 30 into stator slots 36.

The end turns 38 are provided with an outer electrically insulative layer 44 prior to encapsulating the end turns 38. This can be most readily accomplished by providing wire 42 with outer layer 44 prior to forming wire 42 into windings 30 and before installing the windings 30 on stator core 28. After installing windings 30 on stator core 28, end turns 38 are encapsulated with heat transmissive material 32. The stator core and rotor can be coupled together to form electric machine 20 either before or after end turns 38 have been encapsulated. Similarly, if the electric machine 20 will have a housing 50, the end turns 38 can be encapsulated either prior to installation of the stator core 28 in housing 50 or afterwards. Generally, it will be advantageous to mold heat transmissive material 32 under pressure using molding jigs. The end turns 38 can also be dipped into the heat transmissive material 32 to encapsulate the end turns 38. One advantage of a dip process is that it can more easily be used to form a gap 64 between the heat transmissive material and stator core 28. Such a gap 64 is shown in Figure 11 and leaves a small length of the end turns 38 exposed between heat transmissive material 32 and stator core 28 and also allows cooling fluids, i.e., gases and liquids, to flow through the gap to enhance heat removal.

When the end turns are encapsulated prior to installing the electric machine in a housing, or, when electric machine 20 is not provided with a housing, fixtures and molds are used when encapsulating end turns 38 with heat transmissive material 32. Alternatively, stator core 28 can be installed in a housing 50 prior to encapsulating end turns 38 with the heat transmissive material 32 being introduced into housing 50 in a molten condition. The housing 50 can thereby act as a mold and reduce or eliminate the need for the fixtures and molds used to form the final shape of heat transmissive material 32.

Figure 7 illustrates an embodiment where end turns 38 are encapsulated prior to installing electric machine 20 in housing 50. Figure 8 illustrates an embodiment wherein electric machine 20 is installed in housing 50 prior to encapsulating end turns 38 with housing 50 acting as a mold for heat transmissive material 32. The use of housing 50 as a partial or complete mold for heat transmissive material 32 is similar to using conventional potting materials to encapsulate the end turns of an electrical machine within the housing of the electrical machine. By molding material 32 in housing 50, the surface area over which heat transmissive material 32 and housing 50 is in direct contact can be readily enlarged. This enlarged surface area of contact enhances the transfer of heat from material 32 to housing 50.

The heat transmissive material 32 can also form various heat transfer features to further increase the transfer of heat. Figures 9 and 10 illustrate two examples of such heat transfer features. Figure 9 illustrates a heat transfer feature 62 which takes the form of axially projecting fins. Fins 62 increase the surface area of heat transmissive material 32 which is available to transfer heat away from end turns 38. Fins 62 can be formed out of the heat transmissive material by molding, by welding preformed fins on main body of the heat transmissive material or by other suitable means.

Figure 10 illustrates a heat transfer feature 58 which takes the form of a fluid passage extending through heat transmissive material 32. Fluid passage 58 allows a cooling gas or liquid to flow through heat transmissive material 32 and thereby enhance the transfer of heat. Fluid passage 58 can be formed by positioning a hollow tube 60 in an appropriate location and encapsulating the tube 60 at the same time end turns 38 are encapsulated with material 32. Tubes 60 may extend beyond the limits of heat transfer material 32 during the molding process with tubes 60 being trimmed after material 32 has cured.

The heat transfer features 62, 58 depicted in Figures 9 and 10 both increase the surface area of the heat transmissive material 32 exposed to fluid flow relative to a substantially solid and continuous rectilinear cross section as depicted in Figure 5. Still other heat transfer features can be employed to provide an increased surface area exposed to fluid flow. For example, discontinuities such as projections, other than the depicted fins, or recesses, such as dimples, could be formed in the exterior surface of the heat transmissive material to increase the surface area available for heat transfer.

While this invention has been described as having an exemplary design, the present invention may be further modified within the spirit and scope of this disclosure. This application is therefore intended to cover any variations, uses, or adaptations of the invention using its general principles.

## Claims

1. An electric machine comprising:
a rotor and a stator operably coupled with the rotor, the stator comprising:
a stator core defining first and second axial ends;
at least one electrically conductive wire forming a stator winding mounted on the stator core, the stator winding forming a first plurality of end turns projecting axially beyond the first axial end, the first plurality of end turns comprising a plurality of wire segments having electrically insulative outer layers with each wire segment having a discrete insulative outer layer; and
a heat transmissive material disposed on the first plurality of end turns, the heat transmissive material having a thermal conductivity of at least about 50 W·m⁻¹_{·}K⁻¹.

2. The electric machine of claim 1 wherein the heat transmissive material has a thermal conductivity of at least about 150 W·m⁻¹_{·}K⁻¹.

3. The electric machine of claim 1 wherein the heat transmissive material has a thermal conductivity of at least about 200 W·m⁻¹_{·}K⁻¹.

4. The electric machine of claim 1 wherein the heat transmissive material is a metallic material.

5. The electric machine of claim 1 wherein the entire length of the conductive wire is covered with the insulative outer layer.

6. The electric machine of claim 1 further comprising a housing wherein the stator and the rotor are disposed within the housing, the heat transmissive material being thermally coupled with the housing and the housing defining a fluid channel.

7. The electric machine of claim 1 wherein the heat transmissive material forms a heat transfer feature, the heat transfer feature increasing the surface area of the heat transmissive material exposed to fluid flow relative to a substantially solid and continuous rectilinear cross section.

8. The electric machine of claim 1 wherein the insulative outer layer is a ceramic material and the heat transmissive material includes aluminum.

9. The electric machine of claim 1 wherein the stator winding forms a second plurality of end turns projecting axially beyond the second axial end, the second plurality of end turns comprising a plurality of second wire segments having electrically insulative outer layers with each second wire segment having a discrete insulative outer layer; and
a second heat transmissive material having a thermal conductivity of at least about 50 W·m⁻¹·K⁻¹, the second heat transmissive material substantially encapsulating the second plurality of end turns and directly contacting the insulative outer layers thereof; and
wherein the heat transmissive material substantially encapsulates the first plurality of end turns and directly contacts the insulative outer layers thereof.

10. The electric machine of claim 1 wherein at least a portion of the heat transmissive material is separated from the stator core by a gap.

11. A method of manufacturing an electric machine, the method comprising:
providing a rotor;
providing a stator core having first and second axial ends;
forming a winding out of a conductive wire;
installing the winding on the stator core wherein the winding forms a first plurality of end turns projecting beyond the first axial end of the stator core;
providing the conductive wire forming the winding with an electrically insulative outer covering prior to installing the winding on the stator core;
coupling the stator core with the rotor; and
covering the first plurality of end turns with a heat transmissive material having a thermal conductivity of at least about 50 W·m⁻¹·K⁻¹.

12. The method of claim 11 wherein the insulative outer covering is a ceramic material.

13. The method of claim 11 further comprising installing the stator core in a housing and wherein the step of covering the first plurality of end turns with a heat transmissive material comprises introducing the heat transmissive material into the housing in an at least partially liquid condition and allowing the heat transmissive material to at least partially solidify within the housing.

14. The method of claim 11 wherein the step of covering the first plurality of end turns includes substantially entirely surrounding the wire segments forming the first plurality of end turns with the heat transmissive material.

15. The method of claim 11 wherein the heat transmissive material is a metallic material and has a thermal conductivity of at least about 150 W·m⁻¹·K⁻¹.
